# FASCICULE DE BREVET EUROPEEN

(11) **EP 3 851 960 B1**
(45) Date de publication et mention de la délivrance du brevet: **23.09.2026**
(21) Numéro de dépôt: 21151324.7
(22) Date de dépôt: 13.01.2021
(51) Int. Cl.: G06F 9/46, G06F 9/48, G06F 3/14, G06T 15/00, G06F 11/07, G09G 5/00, G09G 5/14, G09G 5/397, G06F 9/451

(54) **PROCÉDÉ DE GÉNÉRATION DE SURFACES GRAPHIQUES À AFFICHER SUR UN ÉCRAN, PROCESSEUR GRAPHIQUE ASSOCIÉ**
VERFAHREN ZUR ERSTELLUNG VON GRAPHISCHEN FLÄCHEN ZUM ANZEIGEN AUF EINEM BILDSCHIRM UND ENTSPRECHENDER GRAPHIKPROZESSOR
METHOD FOR GENERATING GRAPHIC SURFACES TO BE DISPLAYED ON A SCREEN, ASSOCIATED GRAPHIC PROCESSOR

(30) Priorité: 15.01.2020 FR 2000365
(43) Date de publication de la demande: 21.07.2021
(73) Titulaire: THALES, 92400 Courbevoie (FR)
(72) Inventeur: FINE, Alexandre, 33700 Merignac (FR); LEVASSEUR, Nicolas, 33700 Merignac (FR); BREUIL, Yannik, 33700 Merignac (FR)
(74) Mandataire: Lavoix

(56) Documents cités:
- US-A1- 2005 162 434

## Description

La présente invention concerne un procédé de génération de surfaces graphiques à afficher sur un écran, le procédé étant mis en œuvre par un processeur graphique.

L'invention concerne également un tel processeur graphique apte à générer des surfaces graphiques à afficher sur l'écran.

L'invention concerne également une plateforme comprenant un tel processeur graphique et un processeur central, relié au processeur graphique.

L'invention concerne le domaine des systèmes d'affichage de données, de préférence destinés à être embarqués à bord d'un aéronef, notamment dans un cockpit d'aéronef.

L'invention concerne en particulier le domaine des processeurs graphiques inclus dans ces systèmes d'affichage, ces processeurs graphiques étant également généralement appelés GPU (de l'anglais *Graphic Processing Unit*). De tels processeurs graphiques sont typiquement réalisés sous forme d'un ou plusieurs circuits intégrés dédiés, tels qu'un ou plusieurs ASIC (de l'anglais *Application Specific Integrated Circuit*).

Chaque processeur graphique est généralement relié à un processeur central, en particulier un processeur multicœurs, pour former une plateforme, le processeur central étant également généralement appelé CPU (de l'anglais *Central Processing Unit*)

Sur les écrans de faible taille, ou encore de faible résolution, seule une application est affichée sur l'écran. Par application, on entend le calcul, par le processeur central CPU, de symbologies à partir de données issues de bases de données et de capteurs de l'aéronef, le processeur graphique GPU étant alors apte à transformer en signaux vidéo la ou les applications issues du processeur central CPU, c'est-à-dire les symbologies calculées par le processeur central CPU.

Avec l'augmentation de la taille des écrans, plusieurs applications peuvent être amenées à partager l'écran et donc à gérer des affichages simultanés, chaque application correspondant alors à une ou plusieurs surfaces graphiques. Notamment, dans un contexte avionique, des plateformes calculateurs avioniques sont aussi destinées à exécuter plusieurs applications à la fois, et ceci d'autant plus lorsque ces plateformes comportent des calculateurs multicœurs. Ces surfaces graphiques peuvent être superposées avec transparence ou être juxtaposées. Ainsi, dans le domaine aéronautique, des informations critiques de pilotage sont par exemple à afficher en même temps qu'une carte numérique du terrain survolé, information considérée comme non critique dans la mesure où elle n'est pas susceptible de mettre en péril la sécurité de l'aéronef. Ces applications sont par exemple traitées par un processeur graphique GPU commun, et il convient alors de gérer l'accès des différentes applications au processeur graphique GPU en tenant compte des différents niveaux de priorité.

Le document US 6 980 216 enseigne alors d'allouer à chaque application une durée temporelle prévisionnelle et de contrôler, lorsque l'application est en cours, si cette durée est atteinte ou dépassée. Un tel procédé offre alors une ségrégation temporelle des applications au sein du processeur central CPU, et comporte une prédiction de temps d'exécution sur le GPU en prenant en compte divers paramètres. Toutefois, cette prédiction est couteuse en termes de performance et de ressources nécessaires, car elle requiert une phase d'apprentissage afin d'établir une base de données de performance de commandes graphiques.

On connait également, du document FR 2 908 916 B1, un processeur central CPU permettant de traiter en même temps au moins deux applications graphiques, un processeur graphique GPU permettant de mettre sous forme de signaux vidéo les applications graphiques issues du processeur central CPU, et une mémoire du processeur central CPU partagée entre les applications graphiques, chaque application ayant un espace de stockage spécifique dans ladite mémoire. Le processeur central CPU comprend en outre un gestionnaire graphique apte à détecter une violation de la ségrégation des applications dans leur fenêtre d'affichage respective, un dépassement de temps de traitement de chaque application, ou encore une violation d'espaces de stockage spécifiques.

US 2005/0162434 A1 concerne un pilote graphique permettant de faciliter le partitionnement d'un temps de rendu graphique afin de fournir une allocation améliorée de ressources entre plusieurs fenêtres et/ou plusieurs clients graphiques.

Toutefois, le partitionnement de l'affichage des applications graphiques n'est pas toujours optimal.

Le but de l'invention est alors de proposer un procédé de génération de surfaces graphiques à afficher sur un écran, et un processeur graphique associé, permettant d'améliorer le partitionnement de l'affichage des surfaces graphiques.

A cet effet, l'invention a pour objet un procédé de génération de surfaces graphiques à afficher sur un écran, selon la revendication 1.

Ainsi, de par l'étape de commutation - entre la génération d'une première surface graphique et la génération d'une deuxième surface graphique - comportant la sauvegarde d'un contexte d'exécution graphique de la première surface graphique, puis la restauration pour la deuxième surface graphique d'un contexte d'exécution graphique précédemment sauvegardé, le procédé de génération selon l'invention permet d'offrir un partitionnement de l'affichage des surfaces graphiques pour le processeur graphique GPU.

De préférence, le fait d'associer à chaque application logicielle respective un ensemble de surface(s) graphique(s) et de contexte(s) d'exécution graphique permet d'effectuer une allocation des ressources du processeur graphique GPU, afin d'obtenir un partitionnement encore plus sûr de l'affichage des surfaces graphiques.

De préférence encore, à chaque application logicielle est associée une durée limite globale respective pour la génération de l'ensemble de surface(s) graphique(s) de ladite application. Si la durée limite globale est atteinte pour une application respective pendant la génération d'une surface graphique de ladite application, alors la génération de cette surface graphique est interrompue, pour commuter vers la génération d'une surface graphique d'une autre application logicielle, ce qui permet également d'améliorer encore le partitionnement de l'affichage des surfaces graphiques, et de manière générale des ressources du processeur graphique, dont sa mémoire.

Suivant d'autres aspects avantageux de l'invention, le procédé de génération est selon l'une quelconque des revendications 2 à 6.

L'invention a également pour objet un processeur graphique selon la revendication 7.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système avionique selon l'invention, destiné à être embarqué à bord d'un aéronef et comprenant une plateforme avionique, la plateforme comportant un processeur central et un processeur graphique relié au processeur central, ainsi qu'un écran d'affichage ;
- la figure 2 est un organigramme d'un procédé, selon l'invention, de génération de surfaces graphiques à afficher sur l'écran, le procédé étant mis en œuvre par le processeur graphique de la figure 1 ; et
- la figure 3 est un chronogramme schématique représentant des générations de surface graphique et des commutations entre générations de surface graphique.

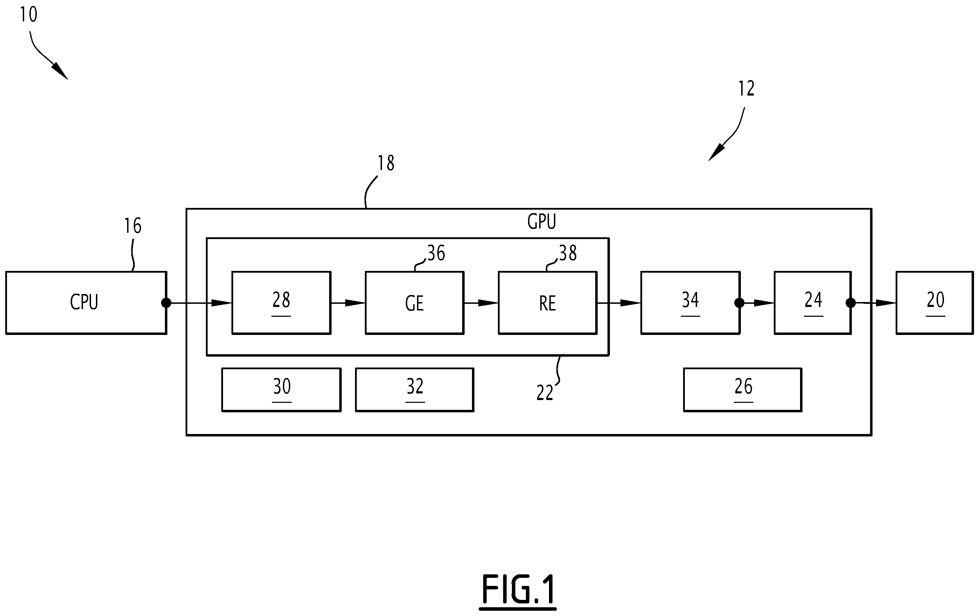

Sur la figure 1, un système avionique 10, destiné à être embarqué à bord d'un aéronef, non représenté, comprend une plateforme avionique 12.

La plateforme avionique 12 comprend un processeur central 16, également appelé CPU (de l'anglais *Central Processing Unit),* et un processeur graphique 18, également appelé GPU (de l'anglais *Graphic Processing Unit),* le processeur graphique 18 étant relié au processeur central 16.

En complément, la plateforme 12 comprend un écran d'affichage 20, relié par exemple au processeur graphique 18.

Le processeur central 16 est connu en soi. Le processeur central 16 est par exemple un processeur central multicœurs. En variante, le processeur central 16 est par exemple un processeur central mono-cœur.

Le processeur graphique 18 comprend un module 22 de génération de surfaces graphiques respectives à afficher sur l'écran d'affichage 20, chaque surface graphique formant un ensemble de pixel(s) à afficher et un module 24 d'affichage de chaque surface graphique sur l'écran d'affichage 20, le module d'affichage 24 étant relié au module de génération 22.

Le processeur graphique 18 comprend en outre une mémoire 26 de stockage de données et un module 28 de commutation entre générations respectives d'une surface graphique correspondante. Le module de commutation 28 est par exemple intégré au module de génération 22, comme représenté sur la figure 1. En variante, le module de commutation 28 est connecté en entrée du module de génération 22.

En complément facultatif, le processeur graphique 18 comprend un module 30 d'émission d'un signal d'erreur si une durée maximale de rafraichissement associée à une surface graphique respective est atteinte lors de la génération de ladite surface graphique respective. Dans l'exemple de la figure 1, le module d'émission 30 est distinct du module de génération 22. En variante, le module d'émission 30 est, de manière analogue au module de commutation 28 sur la figure 1, intégré au module de génération 22.

En complément facultatif encore, le processeur graphique 18 comprend un module 32 de vérification du traitement de commandes de tracé reçues en entrée du processeur graphique 18. Dans l'exemple de la figure 1, le module de vérification 32 est distinct du module de génération 22. En variante, le module de vérification 32 est, de manière analogue au module de commutation 28 sur la figure 1, intégré au module de génération 22.

Selon une variante, le module de commutation 28, le module d'émission 30 et le module de vérification 32 sont alors intégrés au module de génération 22.

En complément, le processeur graphique 18 comprend un module 34 de composition d'une image à partir de la ou des surfaces graphiques générées par le module de génération 22, le module d'affichage 24 étant alors apte à afficher l'image composée par le module de composition 34.

Le module de génération 22 est configuré pour générer au moins une surface graphique respective à afficher sur l'écran d'affichage 20. En particulier, le module de génération 22 est configuré pour générer plusieurs surfaces graphiques respectives, les unes à la suite des autres. Les surfaces graphiques sont générées pour plusieurs applications logicielles distinctes, et à chaque application logicielle respective est associé un ensemble de surface(s) graphique(s) et de contexte(s) d'exécution graphique. Ces ensembles de surface(s) graphique(s) et de contexte(s) d'exécution graphique sont de préférence disjoints les uns des autres, afin d'obtenir un partitionnement plus sûr entre applications logicielles distinctes. En complément, chaque ensemble comporte une liste d'attribut(s) pour chaque surface graphique.

Dans la suite de la description, en cas de commutation entre la génération d'une surface graphique courante et la génération d'une surface graphique suivante, la surface graphique courante sera également appelée première surface graphique S1, et la surface graphique suivante sera également appelée deuxième surface graphique S2. Le module de génération 22 est alors configuré pour générer la première surface graphique S1, puis pour générer la deuxième surface graphique S2, et en cas d'interruption de la génération de la première surface graphique S1, le module de commutation 28 est configuré pour commuter entre la génération de la première surface graphique S1 et la génération de la deuxième surface graphique S2.

Par surface graphique, on entend un espace de stockage de pixels, destiné ou non à l'affichage, dans lequel la chaîne de création graphique effectue une opération de tracé. L'homme du métier comprendra alors que la surface graphique correspond, par exemple, à la *« Drawing Surface »,* définie dans le standard EGL, en particulier dans le document intitulé « OpenGL® ES Native Platform Graphics Interface », version 1.0 de juillet 2003 et suivantes.

Par contexte d'exécution graphique, on entend une collection d'états paramétrant le fonctionnement de la chaîne de création graphique, tels que par exemple des définitions de lois de transformation géométrique, des valeurs de couleurs de tracé, ou des valeurs d'effacement, ou encore des identifications de textures à appliquer. L'homme du métier comprendra alors que le contexte d'exécution graphique correspond, par exemple, au *« Rendering Context »,* défini également dans le standard EGL précité.

Par liste d'attribut(s), on entend des informations définissant une représentation logique à partir de laquelle au moins une surface graphique va être générée. La liste d'attribut(s) comporte par exemple des informations définissant un cadre virtuel, telles que la position et/ou les dimensions dudit cadre, à l'intérieur duquel la surface graphique respective va être générée. L'homme du métier comprendra alors que la liste d'attribut(s) correspond, par exemple, à une fenêtre, également appelée « *Native Window »,* définie aussi dans le standard EGL précité.

Le module de génération 22 est configuré pour associer une durée limite globale respective à la génération de l'ensemble de surface(s) graphique(s) de chaque application logicielle. Si la durée limite globale est atteinte pour une application respective pendant la génération d'une surface graphique de l'ensemble de surface(s) graphique(s) de ladite application respective, alors le module de génération 22 est configuré en outre pour interrompre la génération de la surface graphique courante pour laquelle cette durée limite globale est atteinte.

Le module de génération 22 est configuré pour associer à une ou plusieurs surfaces graphiques, de préférence à chaque surface graphique, une durée limite unitaire respective. Le module de génération 22 est alors configuré, si la durée limite unitaire est atteinte pour une surface graphique respective, pour interrompre la génération de ladite surface graphique respective.

A chaque surface graphique est associé en outre une fréquence de génération respective, et la valeur de la durée limite unitaire d'une surface graphique respective dépend alors de ladite fréquence de génération. La valeur de la durée limite unitaire d'une surface graphique respective est de préférence inférieure ou égale à l'inverse de la fréquence de génération de ladite surface graphique.

En complément facultatif ou en variante, une durée maximale de rafraichissement est associée à chaque surface graphique respective. La valeur de la durée maximale de rafraîchissement est par exemple fonction des dimensions de la surface graphique respective. Le module de génération 22 est alors configuré, si la durée maximale de rafraichissement est atteinte lors de la génération d'une surface graphique respective, pour interrompre ladite génération de la surface graphique respective.

En complément facultatif encore, le module de génération 22 est configuré en outre pour incrémenter un compteur temporel respectif pour chaque surface graphique. Selon ce complément facultatif, le module de génération 22 est de préférence configuré pour réinitialiser le compteur temporel respectif à chaque nouvelle génération d'une surface graphique respective, c'est-à-dire à chaque début d'une nouvelle génération d'une surface graphique respective. En complément encore, en cas d'interruption de la génération d'une surface graphique respective, le module de commutation 28 est configuré pour sauvegarder la valeur du compteur temporel de la surface graphique dont la génération est interrompue, et le module de génération 22 est alors configuré pour, lors d'une reprise subséquente de ladite génération, incrémenter à nouveau le compteur temporel associé à ladite surface graphique à partir de la valeur sauvegardée lors de l'interruption, c'est-à-dire pour reprendre l'incrémentation du compteur temporel à la valeur à laquelle elle avait été arrêtée au moment de l'interruption.

Le module de génération 22 comporte, par exemple, un moteur géométrique 36 apte à générer au moins un groupe de primitive(s) géométrique(s) et un moteur de rendu 38 apte à convertir chaque groupe de primitive(s) géométrique(s) en une surface graphique respective. Le moteur géométrique 36 est également appelé GE (de l'anglais *Geometric Engine),* et le moteur de rendu 38 est également appelé RE (de l'anglais *Raster Engine,* ou encore *Rendering Engine).*

Le module de génération 22, et en complément facultatif le module de composition 34, forment une chaîne de création graphique d'une image respective, apte à être affichée à l'écran 20 par le module d'affichage 24. La chaîne de création graphique est également appelée pipeline graphique.

Le module d'affichage 24 est configuré pour afficher de manière générale chaque surface graphique sur l'écran 20, notamment pour afficher chaque image sur l'écran 20.

En complément facultatif, le module d'affichage 24 est également configuré pour mélanger une image respective avec une vidéo, par exemple stocké dans la mémoire de stockage 26, puis pour afficher le mélange de l'image et de la vidéo sur l'écran d'affichage 20.

La mémoire 26 est reliée à chacun des modules du processeur graphique 18, notamment au module de génération 22, au module d'affichage 24 et au module de commutation 28, ainsi qu'en complément facultatif au module d'émission 30, au module de vérification 32 et au module de composition 34.

Le module de commutation 28 est configuré pour commuter entre la génération de la première surface graphique S1 et la génération de la deuxième surface graphique S2. Selon l'invention, le module de commutation 28 est configuré en outre pour sauvegarder, lors de cette commutation, un contexte d'exécution graphique CTX1 de la première surface graphique S1. En outre, si la génération de la deuxième surface graphique S2 avait été interrompue lors d'une commutation précédente avec la génération d'une autre surface graphique, le module de commutation 28 est configuré en outre pour restaurer un contexte d'exécution graphique CTX2 de la deuxième surface graphique S2, la restauration étant effectuée après la sauvegarde du contexte d'exécution graphique CTX1 de la première surface graphique S1, le contexte restauré CTX2 ayant été sauvegardé lors de ladite commutation précédente.

Le contexte d'exécution graphique CTX1, CTX2 sauvegardé pour la surface graphique S1, S2 respective comporte par exemple au moins une information choisie parmi le groupe consistant en :
- une information de bibliothèque de rendu, telle qu'une couleur, une largeur de trait, une texture, un attribut de texture, un attribut de liste et un attribut alphanumérique ;
- une information sur un emplacement mémoire et une taille mémoire de commande(s) graphique(s) à exécuter pour la surface graphique S1, S2 respective ; et
- une information d'une ressource matérielle du processeur graphique 18, telle qu'une zone mémoire, c'est-à-dire une zone de la mémoire 26, accessible pour l'exécution graphique de la surface graphique S1, S2 respective.

Le contexte d'exécution graphique CTX1, CTX2 sauvegardé pour la surface graphique S1, S2 respective comporte de préférence chacune des informations parmi le groupe précité.

L'homme du métier comprendra alors qu'outre la sauvegarde du contexte d'exécution graphique CTX1, CTX2 utilisé pour la génération de la surface graphique S1, S2 respective, chaque surface graphique S1, S2 en cours de génération est elle-même sauvegardée lors d'une commutation respective. Cette sauvegarde de la surface graphique S1, S2 respective en cours de génération est, par exemple, effectuée via une sauvegarde, à l'instant de la commutation, de l'état de la mémoire contenant ladite surface graphique S1, S2, également appelée mémoire pixel.

De plus, comme indiqué précédemment, à chaque application logicielle respective est associé un ensemble de surface(s) graphique(s) et de contexte(s) d'exécution graphique, dans lequel la ou les surfaces graphiques sont des objets distincts du ou des contextes d'exécution graphique. L'homme du métier observera alors que, dans toute la description, un contexte d'exécution graphique d'une surface graphique respective désigne plus précisément un contexte d'exécution graphique utilisé pour la génération de ladite surface graphique respective.

Lorsqu'en complément facultatif le module de génération 22 est configuré pour incrémenter un compteur temporel respectif pour chaque surface graphique, le module de commutation 28 est configuré en outre pour sauvegarder la valeur du compteur temporel de la surface graphique dont le contexte d'exécution graphique est sauvegardé lors d'une commutation.

Lorsqu'en complément facultatif la durée limite globale est atteinte pour une application respective pendant la génération d'une surface graphique courante de l'ensemble de surface(s) graphique(s) de ladite application respective, et que la génération de ladite surface graphique courante est interrompue par le module de génération 22, le module de commutation 28 est configuré pour effectuer la commutation de la génération de ladite surface graphique courante, en particulier la sauvegarde du contexte d'exécution graphique de ladite surface graphique courante, avant la génération d'une surface graphique suivante d'un ensemble de surface(s) graphique(s) d'une autre application logicielle. L'homme du métier comprendra en outre que si la surface graphique suivante avait fait l'objet d'une interruption précédente, le module de commutation 28 est configuré pour, à la fin de la commutation de la surface graphique courante, restaurer le contexte d'exécution graphique de la surface graphique suivante, celui-ci ayant été sauvegardé lors de l'interruption précédente de la surface graphique suivante.

De manière analogue, lorsque la durée limite unitaire pour une surface graphique respective est atteinte, et que la génération de ladite surface graphique respective est interrompue par le module de génération 22, le module de commutation 28 est configuré en outre pour effectuer la commutation de la génération de ladite surface graphique respective, notamment la sauvegarde du contexte d'exécution graphique de ladite surface graphique respective, vers la génération de la surface graphique suivante. Là encore, si la génération de la surface graphique suivante avait été préalablement interrompue avec une sauvegarde du contexte d'exécution graphique de la surface graphique suivante lors de cette interruption, le module de commutation 28 est configuré en outre pour, préalablement à la reprise de la génération de la surface graphique suivante, restaurer ledit contexte d'exécution graphique de la surface graphique suivante.

L'homme du métier observera par ailleurs que lorsqu'en complément facultatif la durée maximale de rafraichissement est atteinte pour une surface graphique respective pendant la génération de ladite surface graphique respective, et que la génération de ladite surface graphique respective est interrompue par le module de génération 22, alors aucune sauvegarde d'un contexte d'exécution graphique de ladite surface graphique respective n'est effectuée par le module de commutation 28 lors de la commutation subséquente. En effet, étant donné que la durée maximale de rafraîchissement est atteinte pour la surface graphique correspondante, la génération de ladite surface graphique ne sera pas reprise ultérieurement, et il n'est alors pas nécessaire de sauvegarder le contexte d'exécution graphique pour ladite surface dont la génération était en cours lorsque la durée maximale de rafraichissement était atteinte.

De manière similaire, lorsqu'en complément facultatif un traitement incorrect d'une commande de tracé est détecté par le module de vérification 32, et que la génération de la surface graphique correspondant à ladite commande de tracé est interrompue par le module de génération 22, aucune sauvegarde d'un contexte d'exécution de la surface graphique correspondant à ladite commande de tracé n'est effectuée par le module de commutation 28 lors de la commutation subséquente. En effet, le module de vérification 32 ayant détecté une commande de tracé erronée, la génération de ladite surface graphique ne sera pas reprise ultérieurement, et il n'est alors pas nécessaire de sauvegarder le contexte d'exécution graphique pour ladite surface graphique.

Selon ce complément facultatif, le module de commutation 28 est de préférence configuré en outre pour positionner, à un état invalide, le contexte d'exécution graphique de la surface graphique correspondant à la commande de tracé pour laquelle un traitement incorrect a été détecté, en vue d'une réinitialisation ultérieure du contexte d'exécution graphique pour ladite surface graphique. De préférence encore, lors d'une prochaine commutation entre la génération d'une surface graphique courante et la génération de ladite surface graphique pour laquelle une commande de tracé avec traitement incorrect avait été détecté, le module de commutation 28 est configuré en outre pour réinitialiser le contexte d'exécution graphique avant la commutation vers la génération de ladite surface graphique. Autrement dit, le module de commutation 28 est configuré en outre pour, en cas de détection d'un contexte d'exécution graphique à l'état invalide, réinitialiser ledit contexte d'exécution graphique avant la prochaine commutation vers la génération de la surface graphique utilisant ledit contexte d'exécution graphique.

Le module d'émission 30 est configuré pour émettre un premier signal d'alerte si la durée maximale de rafraîchissement est atteinte pour une surface graphique respective lors de la génération de ladite surface graphique respective. Ce premier signal d'alerte signifie alors que la durée maximale de rafraîchissement a été atteinte sans que la génération de la surface graphique respective n'ait été achevée, et ce premier signal d'alerte permet alors d'informer d'une erreur liée à cette atteinte de la durée maximale de rafraichissement, avec une génération incomplète de la surface graphique respective.

En complément facultatif encore, le module d'émission 30 est configuré pour émettre un deuxième signal d'alerte si un traitement incorrect d'une commande de tracé a été détecté par le module de vérification 32 et que la génération de la surface graphique correspondant à ladite surface de tracé a alors été interrompue. Ce deuxième signal d'alerte permet alors d'informer d'une erreur dans l'exécution de la génération de ladite surface graphique, avec une commande de tracé erronée.

En complément facultatif, le module de vérification 32 est configuré pour vérifier le traitement de commande de tracé reçu en entrée du processeur graphique 18, et est en particulier configuré pour détecter un traitement incorrect d'une commande de tracé. Si le module de vérification 32 détecte un tel traitement incorrect d'une commande de tracé, alors il est configuré en outre pour envoyer au module de génération 22 un signal relatif à ladite détection du traitement incorrect, afin que le module de génération 22 interrompe la génération de la surface graphique correspondant à ladite commande de tracé pour laquelle un traitement incorrect a été détecté.

Le module de composition 34 est configuré pour composer chaque image à partir de la ou des surfaces graphiques correspondantes, notamment en positionnant la ou lesdites surfaces graphiques, par exemple les unes par rapport aux autres, et en les superposant le cas échéant.

Le moteur géométrique 36, ou GE, est configuré pour générer au moins un groupe de primitive(s) géométrique(s), c'est-à-dire pour générer une portion d'image vectorielle.

Le moteur de rendu 38 est ensuite configuré pour convertir chaque groupe de primitive(s) géométrique(s) en une surface graphique respective, c'est-à-dire pour convertir la portion d'image vectorielle correspondant au groupe de primitive(s) géométrique(s) en une portion d'image matricielle correspondant à ladite surface graphique. Cette conversion effectuée par le moteur de rendu 38 est également appelée rastérisation, ou encore matricialisation.

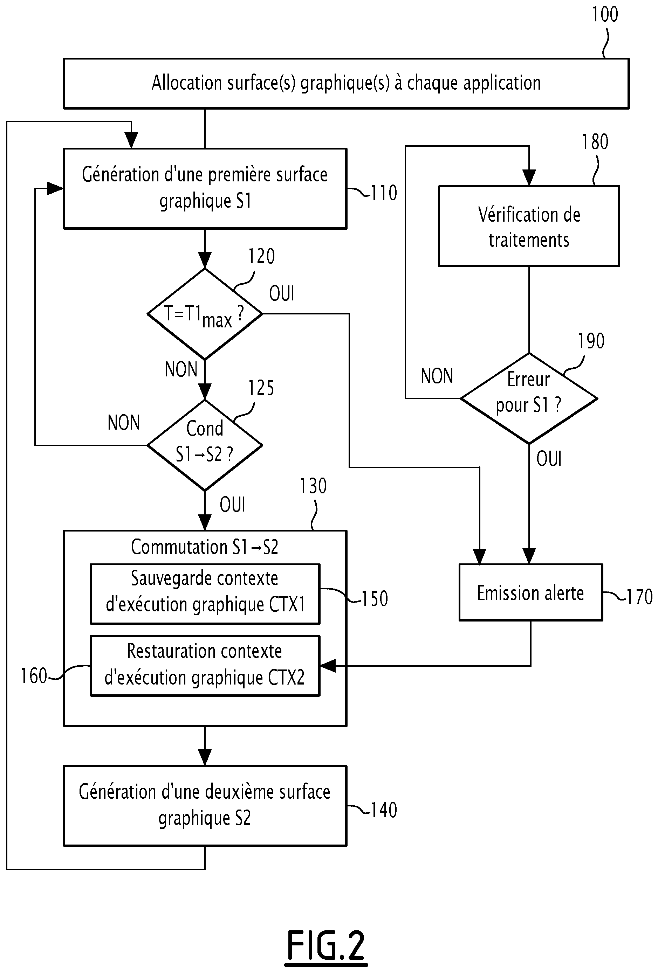

Le fonctionnement du système avionique 10 selon l'invention, et en particulier du processeur graphique 18, va désormais être expliqué à l'aide de la figure 2 représentant un organigramme d'un procédé d'affichage de pixels à l'écran 20, et en particulier d'un procédé de génération de surfaces graphiques, mis en œuvre par le processeur graphique 18.

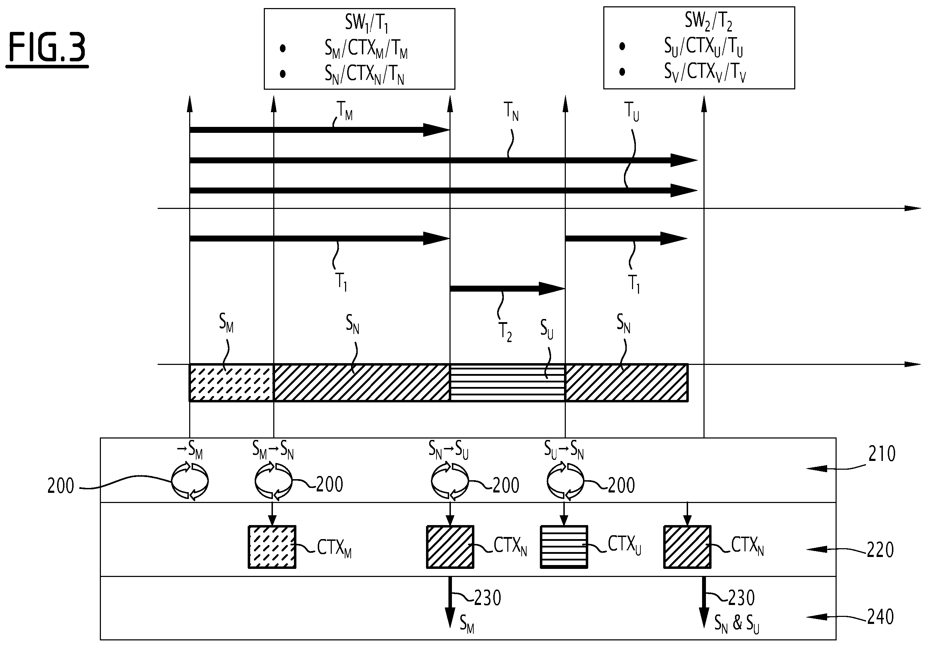

Le fonctionnement du système avionique 10 selon l'invention, et en particulier du processeur graphique 18, va désormais être expliqué à l'aide de la figure 2 représentant un organigramme d'un procédé d'affichage de pixels à l'écran 20, et en particulier d'un procédé de génération de surfaces graphiques, mis en œuvre par le processeur graphique 18 ; ainsi qu'à l'aide de la figure 3 représentant un chronogramme schématique illustrant différentes générations successives de surfaces graphiques, ainsi que des commutations respectives entre générations de surfaces graphiques.

Lors d'une étape initiale 100, le processeur graphique 18 alloue, par exemple via son module de génération 22, un ensemble de surface(s) graphique(s) et de contexte(s) d'exécution graphique à chaque application logicielle respective pour laquelle des informations sont à afficher sur l'écran d'affichage 20.

Dans l'exemple de la figure 3, le module de génération 22 alloue ainsi à une première application logicielle SW₁, ayant une première durée limite globale T₁, un premier ensemble comportant une surface graphique S_{M} avec un contexte d'exécution graphique CTX_{M} et une durée limite unitaire T_{M} associés, ainsi qu'une autre surface graphique S_{N} avec un contexte d'exécution graphique CTX_{N} et une durée limite unitaire T_{N} associés.

Dans cet exemple de la figure 3, le module de génération 22 alloue également, à une deuxième application logicielle SW₂, distincte de la première application logicielle SW, et ayant une deuxième durée limite globale T₂, un deuxième ensemble comportant une surface graphique S_{U} avec un contexte d'exécution graphique CTX_{U} et une durée limite unitaire T_{U} associés, ainsi qu'une autre surface graphique S_{V} avec un contexte d'exécution graphique CTX_{V} et une durée limite unitaire T_{V} associés.

A l'issue de cette étape initiale d'allocation 100, le processeur graphique 18 passe à l'étape suivante 110 lors de laquelle le module de génération 22 génère une première surface graphique S1, puis le module de génération 22 teste, lors de l'étape suivante 120 si la durée maximale de rafraichissement T1_{MAX} pour cette première surface graphique S1 est atteinte, et sinon passe à une étape suivante 125 lors de laquelle le module de génération 22 détermine si une condition nécessite d'interrompre la génération de la première surface graphique S1. Lors de cette étape 125, le module de génération 22 vérifie en particulier si la durée limite globale pour l'application respective à laquelle la première surface graphique correspond est atteinte ou non, et détermine également si la durée limite unitaire respective associée à la première surface graphique S1 est atteinte ou non.

Si au moins l'une desdites conditions pour interrompre la génération de la première surface graphique S1 est remplie, c'est-à-dire si la durée limite globale pour l'application logicielle à laquelle est associée la première surface graphique S1 est atteinte et/ou si la durée limite unitaire respective pour la première surface graphique S1 est atteinte, alors le processeur graphique passe à l'étape suivante 130 lors de laquelle le module de commutation 28 effectue la commutation entre la génération de la première surface graphique S1 et la génération d'une deuxième surface graphique S2.

Sinon, c'est-à-dire si aucune condition pour une interruption de la génération de la première surface graphique S1 n'est remplie, alors le processeur graphique 18, en particulier le module de génération 22, poursuit l'étape de génération 110 de la première surface graphique S1 jusqu'à ce que celle-ci soit achevée ou bien qu'une condition d'interruption de ladite génération soit vérifiée.

Lors de l'étape de commutation 130, le module de commutation 28 effectue la commutation entre la génération de la première surface graphique S1 et celle de la deuxième surface graphique S2, puis le processeur graphique 18 passe à l'étape suivante 140 lors de laquelle le module de génération 22 génère la deuxième surface graphique S2. A l'issue de l'étape 140 de génération de la deuxième surface graphique S2, le processeur graphique 18 retourne à l'étape 110 afin de générer une nouvelle surface graphique.

Selon l'invention, l'étape de commutation 130 comporte une sous-étape 150 de sauvegarde du contexte d'exécution graphique CTX1 de la première surface graphique S1 ; suivie, si la génération de la deuxième surface graphique S2 avait été interrompue lors d'une commutation précédente avec la commutation d'une autre surface graphique, d'une sous-étape 160 de restauration du contexte d'exécution graphique CTX2 de la deuxième surface graphique S2, afin que la génération de la deuxième surface graphique S2 soit reprise lors de l'étape 140 avec le contexte d'exécution graphique CTX2 qui avait été préalablement sauvegardé, c'est-à-dire dans la situation dans laquelle le contexte d'exécution graphique CTX2 se trouvait lors de la commutation précédente. La sous-étape de sauvegarde 150, et l'éventuelle sous-étape de restauration 160, sont effectuées par le module de commutation 28.

Comme indiqué précédemment, outre la sauvegarde du contexte d'exécution graphique CTX1, CTX2 utilisé pour la génération de la surface graphique S1, S2 respective, chaque surface graphique S1, S2 en cours de génération est elle-même sauvegardée lors d'une commutation respective. Cette sauvegarde de la surface graphique S1, S2 respective est typiquement effectuée via la sauvegarde, au moment de la commutation, de l'état de la mémoire contenant ladite surface graphique S1, S2.

Lors de l'étape de test 120, si la durée maximale de rafraichissement associée à la première surface graphique S1 est atteinte, c'est-à-dire si le test est positif, alors le processeur graphique 18 passe directement à l'étape 170 lors de laquelle le module d'émission 30 émet le premier signal d'alerte, afin d'indiquer que ladite durée maximale de rafraichissement associée à la première surface graphique S1 a été atteinte sans que la génération de la première surface graphique S1 n'ait été achevée.

Le cas échéant, à l'issue de l'étape d'émission d'alerte 170, le processeur graphique 18 va directement à la sous-étape 160 de restauration éventuelle du contexte d'exécution graphique CTX2 pour la prochaine surface graphique S2 à générer, et le contexte d'exécution graphique CTX1 de la première surface graphique S1 n'est alors pas sauvegardé, ainsi qu'expliqué précédemment.

En complément facultatif, en parallèle de la génération de la première surface graphique S1 lors de l'étape 110, le processeur graphique 18 vérifie, lors de l'étape 180 et via son module de vérification 32, le traitement de commandes de tracé reçues à son entrée, et si un traitement incorrect d'une commande de tracé est détecté par le module de vérification 32, alors le module de vérification 32 en informe le module de génération 22 qui détermine si la commande de tracé pour laquelle un traitement incorrect a été détecté correspond au contexte d'exécution graphique CTX1 utilisé pour la première surface graphique S1 en cours de génération, et cette détermination est effectuée lors de l'étape 190 par le module de génération 22. Si le traitement incorrect de la commande de tracé a été détecté pour le contexte d'exécution graphique CTX1 utilisé pour la première surface graphique S1, alors le processeur graphique 18 passe à l'étape 170 lors de laquelle le module d'émission 30 émet le deuxième signal d'alerte afin de signaler cette erreur de traitement de commande de tracé.

Sinon, si lors de l'étape de test 190, le module de génération 22 détermine que le traitement incorrect de commande de tracé détecté ne concerne pas le contexte d'exécution graphique CTX1 utilisé pour la première surface graphique S1, c'est-à-dire si le test de l'étape 190 est négatif, alors le processeur graphique 18 retourne à l'étape 180, et le module de vérification 32 poursuit la vérification du traitement des commandes de tracé reçues à l'entrée du processeur graphique 18.

Là encore, lorsque la deuxième alerte est émise lors de l'étape d'émission 170, le processeur graphique 18 passe, à l'issue de l'étape 170, directement à la sous-étape de restauration 160, afin de restaurer éventuellement le contexte d'exécution graphique CTX2 pour la deuxième surface graphique S2, dans l'hypothèse où ledit contexte d'exécution graphique CTX2 avait été préalablement sauvegardé lors de la commutation précédente. Autrement dit, si la génération de la première surface graphique S1 est interrompue à cause d'un traitement incorrect d'une commande de tracé, alors le contexte d'exécution graphique CTX1 pour ladite première surface graphique S1 n'est pas sauvegardé lors de l'étape 130 de commutation entre la génération de la première surface graphique et la génération de la deuxième surface graphique S2, en particulier la sous-étape de sauvegarde 150 n'est pas effectuée.

Ce fonctionnement du processeur graphique 18 selon l'invention, avec la sauvegarde de contexte d'exécution graphique et la restauration d'un contexte d'exécution graphique éventuellement sauvegardé précédemment, lors de la commutation entre générations de surfaces graphiques, est alors illustré sur la figure 3, où les différentes commutations sont représentées par un symbole 200 avec deux flèches tête-bêche, les symboles 200 représentant ces commutations successives étant regroupés au sein d'une première ligne 210 listant ces commutations successives. Une deuxième ligne 220 regroupe les sauvegardes de contextes d'exécution graphique successivement effectuées, et des flèches 230 indiquant l'achèvement de la génération de surface graphique respective sont regroupées au sein d'une troisième ligne 240.

Dans cet exemple de la figure 3, la première surface graphique à être générée est la surface graphique S_{M} qui donne lieu, à la fin de sa génération, à une commutation vers la génération de la surface graphique suivante, à savoir la surface graphique S_{N}. Lors de la commutation entre la génération de la surface graphique S_{M} et celle de la surface graphique S_{N}, matérialisée par le symbole 200 avec la mention « S_{M} → S_{N} » au-dessus dudit symbole, le contexte d'exécution graphique CTX_{M} associé à la surface graphique S_{M} est sauvegardé par le module de commutation 28.

La surface graphique S_{N} est alors générée par le module de génération 22, et sa génération est interrompue à l'expiration de la première durée limite globale T₁ correspondant à la première application logicielle SW₁, la surface graphique S_{N} étant associé à la première application logicielle SW₁. Cette interruption de la génération de la surface graphique S_{N} donne alors lieu à une commutation de la génération de cette surface graphique S_{N} vers la génération de la surface graphique S_{U} associée à la deuxième application logicielle SW₂, cette commutation étant repérée par le symbole 200 avec la mention « S_{N} → S_{U} » au-dessus dudit symbole. Lors de cette commutation, le module de commutation 28 sauvegarde alors le contexte d'exécution graphique CTX_{N} associé à la surface graphique S_{N}, comme indiqué dans la deuxième ligne 220. En outre, la durée limite unitaire T_{N} associée à la surface graphique S_{M} étant expirée et la surface graphique S_{M} ayant été générée, celle-ci est alors prête à être affichée à l'écran 20, comme indiqué par la flèche 230 avec la mention « S_{M} » contenue dans la troisième ligne 240.

La génération de la surface graphique S_{U} est ensuite effectuée, et celle-ci est interrompue à l'expiration de la deuxième durée limite globale T₂ correspondant à la deuxième application logicielle SW₂, la surface graphique S_{U} étant associée à cette deuxième application logicielle SW₂. Cette interruption donne alors lieu à la commutation, effectuée par le module de commutation 28, de la génération de la surface graphique S_{U} vers celle de la surface graphique S_{N} qui avait été préalablement interrompue, cette commutation étant repérée par le symbole 200 avec la mention « S_{U} → S_{N} » au-dessus dudit symbole. Cette commutation donne également lieu à la sauvegarde du contexte d'exécution graphique CTX_{U} associé à la surface graphique S_{U} dont la génération est interrompue.

Lors de cette commutation entre la génération de la surface graphique S_{U} et celle de la surface graphique S_{N}, le contexte d'exécution graphique CTX_{N} - qui avait été préalablement sauvegardé lors de la précédente commutation entre la génération de la surface graphique S_{N} et celle de la surface graphique S_{U} - est en outre restauré par le module de commutation 28, afin que la génération de la surface graphique S_{U} reprenne là où elle avait été interrompue, en particulier dans la situation, notamment en termes d'exécution graphique, dans laquelle elle se trouvait lorsque ladite génération a été interrompue. L'expiration de la première durée limite globale T₁ coïncide alors avec l'expiration de la durée limite unitaire T_{N} et celle de la durée limite unitaire T_{U} associées respectivement aux surfaces graphiques S_{N} et S_{U}, de sorte que les surface graphiques S_{N} et S_{U} sont prêtes à être affichées à l'expiration de ces durées précitées, comme indiqué par la flèche 230 avec la mention « S_{N} & S_{U} » contenue dans la troisième ligne 240. A l'expiration de ces durées, le contexte d'exécution graphique CTX_{N} de la surface graphique S_{N} est en outre sauvegardé à toutes fins utiles, comme indiqué dans la deuxième ligne 220.

Ainsi, le processeur graphique 18 permet, de par son module de commutation 28 effectuant la commutation entre les surfaces graphiques successivement générées par le module de génération 22, d'offrir un partitionnement de la génération des surfaces graphiques, également appelé partitionnement graphique, entre applications logicielles SW₁, SW₂ respectives. L'homme du métier relèvera que ce partitionnement est alors effectué directement au niveau du processeur graphique 18.

En outre, le module de commutation 28 effectuant une sauvegarde du contexte d'exécution graphique de la surface graphique dont la génération est interrompue, et restaurant éventuellement, c'est-à-dire lorsque le contexte d'exécution graphique avait été précédemment sauvegardé, le contexte d'exécution graphique de la surface graphique vers laquelle la génération va être commutée, permet d'avoir au final une continuité dans la génération de la surface graphique, même si celle-ci est interrompue à un instant donné.

L'homme du métier observera d'ailleurs que lorsque l'interruption de la génération de la surface graphique relève d'une erreur, telle que l'atteinte de la durée maximale de rafraîchissement et/ou la détection d'un traitement incorrect d'une commande de tracé, le contexte d'exécution graphique de la surface graphique pour laquelle la génération a engendré une erreur n'est pas sauvegardé par le module de commutation 28, étant donné que la génération en erreur de ladite surface graphique ne sera pas reprise ultérieurement.

De plus, lorsqu'à chaque application logicielle SW₁, SW₂ respective est associé un ensemble de surface(s) graphique(s) et de contexte(s) d'exécution graphique, par exemple lors de l'étape d'allocation initiale 100, le processeur graphique 18 permet alors d'obtenir un partitionnement encore plus robuste, de par cette distinction entre ensembles et notamment de cette séparation entre contextes d'exécution graphique.

Par ailleurs, le fait d'avoir une fréquence de génération respective associée à chaque surface graphique, et/ou une durée limite unitaire respective pour chaque génération d'une surface graphique respective, permet d'effectuer un affichage à de multiples fréquences, et alors d'optimiser l'affichage des informations à l'écran 20.

L'homme du métier comprendra alors que, dans ce cas, les informations les plus importantes, telles que des informations associées à la sécurité d'un vol de l'aéronef embarquant le système avionique 10 selon l'invention, sont rafraîchies à une fréquence plus élevée que les informations moins importantes. Autrement dit, l'affichage de ces informations les plus importantes est mis à jour plus régulièrement que celui des informations moins importantes.

Le fait d'allouer à chaque application logicielle un ensemble de surface(s) graphique(s) et de contexte(s) d'exécution graphique permet, en d'autres termes, d'effectuer une ségrégation spatiale entre applications logicielles SW₁, SW₂ respectives lors de l'affichage des informations relatives à chacune d'elle, et d'éviter alors que l'affichage d'une surface graphique associée à la première application logicielle SW₁ ne vienne déborder sur l'affichage d'une autre surface graphique associée à la deuxième application logicielle SW₂.

L'homme du métier comprendra également que le fait d'avoir une durée limite globale T₁, T₂ respective pour la génération de l'ensemble de surface(s) graphique(s) de chaque application logicielle SW₁, SW₂ respective permet d'effectuer une ségrégation temporelle de la génération, puis de l'affichage, des surfaces graphiques associées à chaque application logicielle SW₁, SW₂ respective.

Autrement dit, le processeur graphique 18 selon l'invention permet d'offrir une ségrégation temporelle et/ou spatiale de la génération de surfaces graphiques associées à des applications logicielles SW₁, SW₂ respectives, de préférence à la fois une ségrégation temporelle et une ségrégation spatiale de cette génération, et d'offrir alors un partitionnement plus sûr et plus robuste de l'affichage des surfaces graphiques.

On conçoit ainsi que le procédé de génération de surfaces graphiques et le processeur graphique 18 selon l'invention permettent d'améliorer le partitionnement de l'affichage des surfaces graphiques associées aux applications logicielles SW₁, SW₂.

## Revendications

1. Procédé de génération de surfaces graphiques (S_{M}, S_{N}, S_{U}, S_{V}) à afficher sur un écran (20), le procédé étant mis en œuvre par un processeur graphique (18) et comprenant les étapes suivantes :
- génération (110) d'une première surface graphique (S_{M}; S_{N}; S_{U}) à afficher sur l'écran (20) ;
- commutation (130) entre la génération de la première surface graphique (S_{M}; S_{N}; S_{U}) et la génération d'une deuxième surface graphique (S_{N}; S_{U}; S_{N}) ;
- génération (140) de la deuxième surface graphique (S_{N}; S_{U}; S_{N}) à afficher sur l'écran (20) ;
dans lequel l'étape de commutation (130) comporte :
+ sauvegarde (150) d'un contexte d'exécution graphique (CTX_{M}; CTX_{N} ; CTX_{U}) de la première surface graphique (S_{M}; S_{N} ; S_{U}) ; et
+ si la génération de la deuxième surface graphique (S_{N}; S_{U} ; S_{N}) avait été interrompue lors d'une commutation précédente avec la génération d'une autre surface graphique, restauration (160) d'un contexte d'exécution graphique (CTX_{N}; CTX_{U}; CTX_{N}) de la deuxième surface graphique (S_{N}; S_{U}; S_{N}), le contexte (CTX_{N}; CTX_{U} ; CTX_{N}) restauré ayant été sauvegardé lors de ladite commutation précédente, et
dans lequel une durée limite unitaire (T_{M}, T_{N}, T_{U}, T_{V}) respective est associée à chaque étape de génération d'une surface graphique (S_{M}, S_{N}, S_{U}, S_{V}) respective, et
si la durée limite unitaire (T_{M}, T_{N}, T_{U}, T_{V}) pour une surface graphique (S_{M}, S_{N}, S_{U}, S_{V}) respective est atteinte, alors l'étape (110) de génération de la surface graphique respective est interrompue, et l'étape de commutation (130) est effectuée avant l'étape (140) de génération d'une surface graphique suivante ;
à chaque surface graphique (S_{M}, S_{N}, S_{U}, S_{V}) est associée une fréquence de génération respective, et la valeur de la durée limite unitaire (T_{M}, T_{N}, T_{U}, T_{V}) d'une surface graphique respective (S_{M}, S_{N}, S_{U}, S_{V}) dépend de la fréquence de génération de ladite surface graphique (S_{M}, S_{N}, S_{U}, S_{V}) ;
les surfaces graphiques étant générées pour plusieurs applications logicielles distinctes, et à chaque application logicielle (SW₁, SW₂) respective est associé un ensemble de surfaces graphiques et de contextes d'exécution graphique ;
une durée limite globale (T₁, T₂) respective étant associée à la génération de l'ensemble de surfaces graphiques de chaque application logicielle (SW₁, SW₂), et
si la durée limite globale (T₁) est atteinte pour une application (SW₁) respective pendant une étape (110) de génération d'une surface graphique courante de l'ensemble de surfaces graphiques de ladite application respective (SW₁), alors ladite étape de génération (110) de la surface graphique courante est interrompue, et l'étape de commutation (130) est effectuée avant l'étape (140) de génération d'une surface graphique suivante d'un ensemble de surfaces graphiques d'une autre application logicielle (SW₂).

2. Procédé selon la revendication 1, dans lequel lesdits ensembles sont disjoints les uns des autres ; chaque ensemble comportant une liste d'attribut(s) pour chaque surface graphique.

3. Procédé selon l'une quelconque des revendications précédentes, dans lequel une durée maximale de rafraichissement est associée à chaque surface graphique respective, la valeur de la durée maximale de rafraichissement étant fonction des dimensions de la surface graphique respective, et
si la durée maximale de rafraichissement est atteinte pour une surface graphique respective pendant une étape (110) de génération de ladite surface graphique respective, alors l'étape de génération de la surface graphique respective (110) est interrompue, et la sauvegarde d'un contexte d'exécution graphique de ladite surface graphique respective n'est pas effectuée lors de l'étape subséquente de commutation (130) ;
le procédé comprend de préférence en outre une étape (170) d'émission d'un signal d'erreur si la durée maximale de rafraichissement est atteinte pour une surface graphique respective lors d'une étape de génération de ladite surface graphique respective (110).

4. Procédé selon l'une quelconque des revendications précédentes, dans lequel chaque étape (110, 140) de génération d'une surface graphique respective comporte en outre l'incrémentation d'un compteur temporel respectif pour chaque surface graphique, et l'étape de commutation (130) comporte en outre une sauvegarde de la valeur du compteur temporel de la surface graphique dont le contexte d'exécution graphique est sauvegardé.

5. Procédé selon l'une quelconque des revendications précédentes, dans lequel le procédé comprend en outre une étape (180) de vérification du traitement de commandes de tracé reçues en entrée du processeur graphique (18), et si un traitement incorrect d'une commande de tracé est détecté, alors l'étape (110) de génération de la surface graphique correspondant à ladite commande de tracé est interrompue, et la sauvegarde d'un contexte d'exécution graphique de la surface graphique correspondant à ladite commande de tracé n'est pas effectuée lors l'étape subséquente de commutation (130) ;
le contexte d'exécution graphique étant de préférence positionné dans un état invalide, en vue d'une réinitialisation ultérieure.

6. Procédé selon l'une quelconque des revendications précédentes, dans lequel lors de l'étape de commutation (130), le contexte d'exécution graphique (CTX_{M}; CTX_{N} ; CTX_{U}) sauvegardé pour la surface graphique (S_{M} ; S_{N} ; S_{U}) respective comporte au moins une information choisie parmi le groupe consistant en :
+ une information de bibliothèque de rendu, telle qu'une couleur, une largeur de trait, une texture, un attribut de texture, un attribut de liste et un attribut alphanumérique ;
+ une information sur un emplacement mémoire et une taille mémoire de commande(s) graphique(s) à exécuter pour la surface graphique respective ; et
+ une information d'une ressource matérielle du processeur graphique (18), telle qu'une zone mémoire, accessible pour l'exécution graphique de la surface graphique (S_{M} ; S_{N} ; S_{U}) respective.

7. Processeur graphique (18) apte à générer des surfaces graphiques (S_{M}, S_{N}, S_{U}, S_{V}) à afficher sur un écran (20), le processeur graphique (18) comprenant :
- un module de génération (22) configuré pour générer des surfaces graphiques (S_{M}, S_{N}, S_{U}, S_{V}) respectives à afficher sur l'écran (20) ;
- un module de commutation (28) configuré pour commuter entre la génération d'une première surface graphique (S_{M}; S_{N} ; S_{U}) et la génération d'une deuxième surface graphique (S_{N}; S_{U} ; S_{N}) ;
dans lequel le module de commutation (28) est configuré pour sauvegarder un contexte d'exécution graphique (CTX_{M}; CTX_{N}; CTX_{U}) de la première surface graphique (S_{M}; S_{N} ; S_{U}) ; et si la génération de la deuxième surface graphique (S_{N}; S_{U} ; S_{N}) avait été interrompue lors d'une commutation précédente avec la génération d'une autre surface graphique, configuré pour ensuite restaurer un contexte d'exécution graphique (CTX_{N} ; CTX_{U} ; CTX_{N}) de la deuxième surface graphique (S_{N}; S_{U} ; S_{N}), le contexte (CTX_{N}; CTX_{U}; CTX_{N}) restauré ayant été sauvegardé lors de ladite commutation précédente,
dans lequel le module de génération (22) est configuré pour associer, à chaque génération d'une surface graphique (S_{M}, S_{N}, S_{U}, S_{V}) respective, une durée limite unitaire (T_{M}, T_{N}, T_{U}, T_{V}) respective, et
le module de génération (22) est configuré, si la durée limite unitaire (T_{M}, T_{N}, T_{U}, T_{V}) est atteinte pour une surface graphique (S_{M}, S_{N}, S_{U}, S_{V}) respective, pour interrompre la génération de ladite surface graphique respective, et le module de commutation (28) est configuré en outre pour effectuer la commutation de la génération de ladite surface graphique respective vers la génération de la surface graphique suivante ;
à chaque surface graphique (S_{M}, S_{N}, S_{U}, S_{V}) est associée une fréquence de génération respective, et la valeur de la durée limite unitaire (T_{M}, T_{N}, T_{U}, T_{V}) d'une surface graphique respective (S_{M}, S_{N}, S_{U}, S_{V}) dépend de la fréquence de génération de ladite surface graphique (S_{M}, S_{N}, S_{U}, S_{V}) ;
les surfaces graphiques étant générées pour plusieurs applications logicielles distinctes, et à chaque application logicielle (SW₁, SW₂) respective est associé un ensemble de surfaces graphiques et de contextes d'exécution graphique ;
une durée limite globale (T₁, T₂) respective étant associée à la génération de l'ensemble de surfaces graphiques de chaque application logicielle (SW₁, SW₂), et
si la durée limite globale (T₁) est atteinte pour une application (SW₁) respective pendant une étape (110) de génération d'une surface graphique courante de l'ensemble de surfaces graphiques de ladite application respective (SW₁), alors ladite étape de génération (110) de la surface graphique courante est interrompue, et l'étape de commutation (130) est effectuée avant l'étape (140) de génération d'une surface graphique suivante d'un ensemble de surfaces graphiques d'une autre application logicielle (SW₂).

## Patentansprüche

1. Verfahren zur Erzeugung grafischer Flächen (S_{M}, S_{N}, S_{U}, S_{V}), die auf einem Bildschirm (20) anzuzeigen sind, wobei das Verfahren durch einen Grafikprozessor (18) implementiert wird und die folgenden Schritte umfasst:
- Erzeugen (110) einer ersten grafischen Fläche (S_{M}; S_{N}; S_{U}), die auf dem Bildschirm (20) anzuzeigen ist;
- Umschalten (130) zwischen der Erzeugung der ersten grafischen Fläche (S_{M}; S_{N}; S_{U}) und der Erzeugung einer zweiten grafischen Fläche (S_{N}; S_{U}; S_{N});
- Erzeugen (140) der zweiten grafischen Fläche (S_{N}; S_{U}; S_{N}), die auf dem Bildschirm (20) anzuzeigen ist;
wobei der Umschaltschritt (130) Folgendes umfasst:
+ Speichern (150) eines Grafikausführungskontexts (CTX_{M}; CTX_{N}; CTX_{U}) der ersten grafischen Fläche (S_{M}; S_{N}; S_{U}) und
+ wenn die Erzeugung der zweiten grafischen Fläche (S_{N}; S_{U}; S_{N}), bei einem vorhergehenden Umschalten mit der Erzeugung einer anderen grafischen Fläche unterbrochen worden war, Wiederherstellen (160) eines Grafikausführungskontexts (CTX_{N}; CTX_{U}; CTX_{N}) der zweiten grafischen Fläche (S_{N}; S_{U}; S_{N}), wobei der wiederhergestellte Kontext (CTX_{N}; CTX_{U}; CTX_{N}) bei dem genannten vorhergehenden Umschalten gespeichert worden war, und
wobei jedem Schritt zur Erzeugung einer jeweiligen grafischen Fläche (S_{M}, S_{N}, S_{U}, S_{V}) eine jeweilige einheitliche Grenzdauer (T_{M}, T_{N}, T_{U}, T_{V}) zugeordnet ist, und
wenn die einheitliche Grenzdauer (T_{M}, T_{N}, T_{U}, T_{V}) für eine jeweilige grafische Fläche (S_{M}, S_{N}, S_{U}, S_{V}) erreicht ist, dann der Schritt (110) zur Erzeugung der jeweiligen grafischen Fläche unterbrochen wird und der Umschaltschritt (130) vor dem Schritt (140) zur Erzeugung einer nächsten grafischen Fläche durchgeführt wird;
jeder grafischen Fläche (S_{M}, S_{N}, S_{U}, S_{V}) eine jeweilige Erzeugungsfrequenz zugeordnet ist, und der Wert der einheitlichen Grenzdauer (T_{M}, T_{N}, T_{U}, T_{V}) einer jeweiligen grafischen Fläche (S_{M}, S_{N}, S_{U}, S_{V}) von der Erzeugungsfrequenz der genannten grafischen Fläche (S_{M}, S_{N}, S_{U}, S_{V}) abhängt;
die grafischen Flächen für mehrere verschiedene Softwareanwendungen erzeugt werden, und jeder jeweiligen Softwareanwendung (SW₁, SW₂) eine Menge grafischer Flächen und Grafikausführungskontexte zugeordnet ist;
der Erzeugung der Menge grafischer Flächen jeder Softwareanwendung (SW₁, SW₂) eine jeweilige globale Grenzdauer (T₁, T₂) zugeordnet ist, und
wenn die globale Grenzdauer (T₁) für eine jeweilige Anwendung (SW₁) während eines Schritts (110) zur Erzeugung einer aktuellen grafischen Fläche aus der Menge grafischer Flächen der genannten jeweiligen Anwendung (SW₁) erreicht ist, dann der genannte Erzeugungsschritt (110) der aktuellen grafischen Fläche unterbrochen wird und der Umschaltschritt (130) vor dem Schritt (140) zur Erzeugung einer nächsten grafischen Fläche aus einer Menge grafischer Flächen einer anderen Softwareanwendung (SW₂) durchgeführt wird.

2. Verfahren nach Anspruch 1, wobei die genannten Mengen paarweise disjunkt sind; wobei jede Menge eine Liste von Attribut(en) für jede grafische Fläche umfasst.

3. Verfahren nach einem der vorhergehenden Ansprüche, wobei jeder jeweiligen grafischen Fläche eine maximale Aktualisierungsdauer zugeordnet ist, wobei der Wert der maximalen Aktualisierungsdauer eine Funktion der Abmessungen der jeweiligen grafischen Fläche ist, und
wenn die maximale Aktualisierungsdauer für eine jeweilige grafische Fläche während eines Schritts (110) zur Erzeugung der genannten jeweiligen grafischen Fläche erreicht ist, dann der Schritt (110) zur Erzeugung der jeweiligen grafischen Fläche unterbrochen wird und das Speichern eines Grafikausführungskontexts der genannten jeweiligen grafischen Fläche bei dem nachfolgenden Umschaltschritt (130) nicht durchgeführt wird;
das Verfahren vorzugsweise ferner einen Schritt (170) zum Ausgeben eines Fehlersignals umfasst, wenn die maximale Aktualisierungsdauer für eine jeweilige grafische Fläche bei einem Schritt (110) zur Erzeugung der genannten jeweiligen grafischen Fläche erreicht ist.

4. Verfahren nach einem der vorhergehenden Ansprüche, wobei jeder Schritt (110, 140) zur Erzeugung einer jeweiligen grafischen Fläche ferner das Inkrementieren eines jeweiligen Zeitzählers für jede grafische Fläche umfasst, und der Umschaltschritt (130) ferner ein Speichern des Werts des Zeitzählers der grafischen Fläche umfasst, deren Grafikausführungskontext gespeichert wird.

5. Verfahren nach einem der vorhergehenden Ansprüche, wobei das Verfahren ferner einen Schritt (180) zum Überprüfen der Verarbeitung von Zeichenbefehlen umfasst, die am Eingang des Grafikprozessors (18) empfangen werden, und wenn eine fehlerhafte Verarbeitung eines Zeichenbefehls erkannt wird, dann der Schritt (110) zur Erzeugung der
grafischen Fläche, die dem genannten Zeichenbefehl entspricht, unterbrochen wird, und das Speichern eines Grafikausführungskontexts der grafischen Fläche, die dem genannten Zeichenbefehl entspricht, bei dem nachfolgenden Umschaltschritt (130) nicht durchgeführt wird;
wobei der Grafikausführungskontext vorzugsweise in einen ungültigen Zustand versetzt wird, im Hinblick auf eine spätere Neuinitialisierung.

6. Verfahren nach einem der vorhergehenden Ansprüche, wobei bei dem Umschaltschritt (130) der für die jeweilige grafische Fläche (S_{M}; S_{N}; S_{U}) gespeicherte Grafikausführungskontext (CTX_{M}; CTX_{N}; CTX_{U}) mindestens eine Information umfasst, die aus der Gruppe ausgewählt ist, bestehend aus:
+ einer Information einer Rendering-Bibliothek, wie etwa einer Farbe, einer Strichbreite, einer Textur, einem Texturattribut, einem Listenattribut und einem alphanumerischen Attribut;
+ einer Information über einen Speicherort und eine Speichergröße von Grafikbefehl(en), die für die jeweilige grafische Fläche auszuführen sind; und
+ einer Information einer Hardware-Ressource des Grafikprozessors (18), wie etwa eines Speicherbereichs, der für die grafische Ausführung der jeweiligen grafischen Fläche (S_{M}; S_{N}; S_{U}) zugänglich ist.

7. Grafikprozessor (18), der geeignet ist, grafische Flächen (S_{M}, S_{N}, S_{U}, S_{V}) zu erzeugen, die auf einem Bildschirm (20) anzuzeigen sind, wobei der Grafikprozessor (18) umfasst:
- ein Erzeugungsmodul (22), das konfiguriert ist, jeweilige grafische Flächen (S_{M}, S_{N}, S_{U}, S_{V}) zu erzeugen, die auf dem Bildschirm (20) anzuzeigen sind;
- ein Umschaltmodul (28), das konfiguriert ist, zwischen der Erzeugung einer ersten grafischen Fläche (S_{M}; S_{N}; S_{U}) und der Erzeugung einer zweiten grafischen Fläche (S_{N}; S_{U}; S_{N}) umzuschalten;
wobei das Umschaltmodul (28) konfiguriert ist, einen Grafikausführungskontext (CTX_{M}; CTX_{N}; CTX_{U}) der ersten grafischen Fläche (S_{M}; S_{N}; S_{U}) zu speichern; und, wenn die Erzeugung der zweiten grafischen Fläche (S_{N}; S_{U}; S_{N}) bei einem vorhergehenden Umschalten mit der Erzeugung einer anderen grafischen Fläche unterbrochen worden war, konfiguriert ist, anschließend einen Grafikausführungskontext (CTX_{N}; CTX_{U}; CTX_{N}) der zweiten grafischen Fläche (S_{N}; S_{U}; S_{N}) wiederherzustellen, wobei der wiederhergestellte Kontext (CTX_{N}; CTX_{U}; CTX_{N}) bei dem genannten vorhergehenden Umschalten gespeichert worden war,
wobei das Erzeugungsmodul (22) konfiguriert ist, jeder Erzeugung einer jeweiligen grafischen Fläche (S_{M}, S_{N}, S_{U}, S_{V}) eine jeweilige einheitliche Grenzdauer (T_{M}, T_{N}, T_{U}, T_{V}) zuzuordnen, und
das Erzeugungsmodul (22) konfiguriert ist, wenn die einheitliche Grenzdauer (T_{M}, T_{N}, T_{U},T_{V}) für eine jeweilige grafische Fläche (S_{M}, S_{N}, S_{U}, S_{V})erreicht ist, die Erzeugung der genannten jeweiligen grafischen Fläche zu unterbrechen, und das Umschaltmodul (28) ferner konfiguriert ist, das Umschalten von der Erzeugung der genannten jeweiligen grafischen Fläche zur Erzeugung der nächsten grafischen Fläche durchzuführen;
jeder grafischen Fläche (S_{M}, S_{N}, S_{U}, S_{V}) eine jeweilige Erzeugungsfrequenz zugeordnet ist, und der Wert der einheitlichen Grenzdauer (T_{M}, T_{N}, T_{U},T_{V}) einer jeweiligen grafischen Fläche (S_{M}, S_{N}, S_{U}, S_{V}) von der Erzeugungsfrequenz der genannten grafischen Fläche (S_{M}, S_{N}, S_{U}, S_{V}) abhängt;
die grafischen Flächen für mehrere verschiedene Softwareanwendungen erzeugt werden, und jeder jeweiligen Softwareanwendung (SW₁, SW₂) eine Menge grafischer Flächen und Grafikausführungskontexte zugeordnet ist;
der Erzeugung der Menge grafischer Flächen jeder Softwareanwendung (SW₁, SW₂) eine jeweilige globale Grenzdauer (T₁, T₂) zugeordnet ist, und
wenn die globale Grenzdauer (T₁) für eine jeweilige Anwendung (SW₁) während eines Schritts (110) zur Erzeugung einer aktuellen grafischen Fläche aus der Menge grafischer Flächen der genannten jeweiligen Anwendung (SW₁)erreicht ist, dann der genannte Erzeugungsschritt (110) der aktuellen grafischen Fläche unterbrochen wird und der Umschaltschritt (130) vor dem Schritt (140) zur Erzeugung einer nächsten grafischen Fläche aus einer Menge grafischer Flächen einer anderen Softwareanwendung (SW₂) durchgeführt wird.

## Claims

1. A method for generating graphic surfaces (S_{M}, S_{N}, S_{U}, S_{V}) to be displayed on a screen (20), the method being implemented by a graphics processor (18) and comprising the following steps:
- generating (110) a first graphic surface (S_{M}; S_{N;} S_{U}) to be displayed on the screen (20);
- switching (130) between generating the first graphic surface (S_{M;} S_{N;} S_{U}) and generating a second graphic surface (S_{N}; S_{U;} S_{N});
- generating (140) the second graphic surface (S_{N}; S_{U;} S_{N}) to be displayed on the screen (20);
wherein the switching step (130) includes:
+ saving (150) a graphic execution context (CTX_{M}; CTX_{N}; CTX_{U}) of the first graphic surface (S_{M}; S_{N;} S_{U}); and
+ if the generation of the second graphic surface (S_{N}; S_{U;} S_{N}) had been interrupted during a preceding switch with the generation of another graphic surface, restoring (160) a graphic execution context (CTX_{N;} CTX_{U;} CTX_{N}) of the second graphic surface (S_{N}; S_{U;} S_{N}), the restored context (CTX_{N;} CTX_{U;} CTX_{N}) having been saved during said preceding switch, and
wherein a respective unitary limit duration (T_{M}, T_{N}, T_{U}, T_{V}) is associated with each step for generating a respective graphic surface (S_{M}, S_{N}, S_{U}, S_{V}), and
if the unitary limit duration (T_{M}, T_{N}, T_{U}, T_{V}) for a respective graphic surface (S_{M}, S_{N}, S_{U}, S_{V}) is reached, then the step (110) for generating the respective graphic surface is interrupted, and the switching step (130) is done before the step (140) for generating a subsequent graphic surface;
each graphic surface (S_{M}, S_{N}, S_{U}, S_{V}) is associated with a respective generating frequency, and the value of the unitary limit duration (T_{M}, T_{N}, T_{U}, T_{V}) of a respective graphic surface (S_{M}, S_{N}, S_{U}, S_{V}) depends on the generating frequency of said graphic surface (S_{M}, S_{N}, S_{U}, S_{V});
the graphic surfaces being generated for several distinct software applications, and each respective software application (SW₁, SW₂) is associated with a set of graphic surface(s) and graphic execution context(s);
a respective overall limit duration (T₁, T₂) being associated with the generation of the set of graphic surface(s) of each software application (SW₁, SW₂), and
if the overall limit duration (T₁) is reached for a respective application (SW₁) during a step (110) for generating a current graphic surface of the set of graphic surface(s) of said respective application (SW₁), then said step (110) for generating the current graphic surface is interrupted, and the switching step (130) is done before the step (140) for generating a subsequent graphic surface of a set of graphic surface(s) of another software application (SW₂).

2. The method according to claim 1, wherein said sets are disjoint from one another; each set including a list of attribute(s) for each graphic surface.

3. The method according to any one of the preceding claims, wherein a maximum refresh time is associated with each respective graphic surface, the value of the maximum refresh time depending on the dimensions of the respective graphic surface, and
if the maximum refresh time is reached for a respective graphic surface during a generating step (110) of said respective graphic surface, then the generating step of the respective graphic surface (110) is interrupted, and the saving of a graphic execution context of said respective graphic surface is not done during the subsequent switching step (130);
the method preferably further comprises a step (170) for emitting an error signal if the maximum refresh time is reached for a respective graphic surface during a generating step of said respective graphic surface (110).

4. The method according to any one of the preceding claims, wherein each generating step (110, 140) of a respective graphic surface further includes incrementing a respective time counter for each graphic surface, and the switching step (130) further includes saving the value of the time counter of the graphic surface whose graphic execution context is saved.

5. The method according to any one of the preceding claims, wherein the method further comprises a step (180) for verifying the processing of trace commands received at the input of the graphics processor (18), and if an incorrect processing of a trace command is detected, then the step (110) for generating the graphic surface corresponding to said trace command is interrupted, and the saving of a graphic execution context of the graphic surface corresponding to said trace command is not done during the subsequent switching step (130);
the graphic execution context preferably being positioned in an invalid state, for a later reset.

6. The method according to any one of the preceding claims, wherein during the switching step (130), the graphic execution context (CTX_{M}; CTX_{N}; CTX_{U}) saved for the respective graphic surface (S_{M}; S_{N;} S_{U}) includes at least one information item chosen from the group consisting of:
+ a rendering library information item, such as a color, a line width, a texture, a texture attribute, a list attribute and an alphanumeric attribute;
+ an information item on a memory location and a memory size of graphic command(s) to be executed for the respective graphic surface; and
+ an information item of a hardware resource of the graphics processor (18), such as a memory zone, accessible for the graphic execution of the respective graphic surface (S_{M}; S_{N;} S_{U}).

7. A graphics processor (18) able to generate graphic surfaces (S_{M}, S_{N}, S_{U}, S_{V}) to be displayed on a screen (20), the graphics processor (18) comprising:
- a generating module (22) configured to generate respective graphic surfaces (S_{M}, S_{N}, S_{U}, S_{V}) to be displayed on the screen (20);
- a switching module (28) configured to switch between generating a first graphic surface (S_{M}; S_{N;} S_{U}) and generating a second graphic surface (S_{N}; S_{U;} S_{N});
wherein the switching module (28) is configured to save a graphic execution context (CTX_{M}; CTX_{N}; CTX_{U}) of the first graphic surface (S_{M}; S_{N;} S_{U}); and if the generation of the second graphic surface (S_{N}; S_{U;} S_{N}) had been interrupted during a preceding switch with the generation of another graphic surface, then configured to restore a graphic execution context (CTX_{N;} CTX_{U;} CTX_{N}) of the second graphic surface (S_{N}; S_{U;} S_{N}), the restored context (CTX_{N;} CTX_{U;} CTX_{N}) having been saved during said preceding switch,
wherein the generating module (22) is configured to associate, with each generating a respective graphic surface (S_{M}, S_{N}, S_{U}, S_{V}), a respective unitary limit duration (T_{M}, T_{N}, T_{U}, T_{V}), and
the generating module (22) is configured, if the unitary limit duration (T_{M}, T_{N}, T_{U}, T_{V}) for a respective graphic surface (S_{M}, S_{N}, S_{U}, S_{V}) is reached, to interrupt the generating of said respective graphic surface, and the switching module (28) is further configured to switch from generating said respective graphic surface to generating the next graphic surface,
each graphic surface (S_{M}, S_{N}, S_{U}, S_{V}) is associated with a respective generating frequency, and the value of the unitary limit duration (T_{M}, T_{N}, T_{U}, T_{V}) of a respective graphic surface (S_{M}, S_{N}, S_{U}, S_{V}) depends on the generating frequency of said graphic surface (S_{M}, S_{N}, S_{U}, S_{V});
the graphic surfaces being generated for several distinct software applications, and each respective software application (SW₁, SW₂) is associated with a set of graphic surface(s) and graphic execution context(s);
a respective overall limit duration (T₁, T₂) being associated with the generation of the set of graphic surface(s) of each software application (SW₁, SW₂), and
if the overall limit duration (T₁) is reached for a respective application (SW₁) during a step (110) for generating a current graphic surface of the set of graphic surface(s) of said respective application (SW₁), then said step (110) for generating the current graphic surface is interrupted, and the switching step (130) is done before the step (140) for generating a subsequent graphic surface of a set of graphic surface(s) of another software application (SW₂).
